# EUROPÄISCHE PATENTSCHRIFT

(11) **EP 3 363 660 B1**
(45) Veröffentlichungstag und Bekanntmachung des Hinweises auf die Patenterteilung: **05.08.2020**
(21) Anmeldenummer: 18151543.8
(22) Anmeldetag: 15.01.2018
(51) Int. Cl.: B60C 99/00, B60C 13/04, B60C 11/13, B60C 19/00

(54) **VERWENDUNG EINES FÜR EIN NUTZFAHRZEUG VORGESEHENEN KRAFTFAHRZEUGRADES**
USE OF A MOTOR VEHICLE WHEEL INTENDED FOR A COMMERCIAL VEHICLE
UTILISATION D'UNE ROUE DE VÉHICULE AUTOMOBILE DESTINÉE À UN VÉHICULE UTILITAIRE

(30) Priorität: 20.02.2017 DE 102017202709
(43) Veröffentlichungstag der Anmeldung: 22.08.2018
(73) Patentinhaber: Continental Reifen Deutschland GmbH, 30165 Hannover (DE)
(72) Erfinder: Kleffmann, Jens, 30453 Hannover (DE); Doporto, Mariano, 30419 Hannover (DE)
(74) Vertreter: Finger, Karsten

(56) Entgegenhaltungen:
- WO-A1-2016/135264
- DE-A1-102012 102 418
- US-A1- 2011 057 504

## Beschreibung

Die Erfindung betrifft die *Verwendung eines wärmeisolierten Kraftfahrzeugrades für ein Nutzfahrzeug.*

Fahrzeugreifenfelgen werden üblicherweise aus metallischen Werkstoffen gefertigt. Alle Felgen, insbesondere die auf Basis metallischer Werkstoffe, zeichnen sich durch eine hohe Wärmeleitfähigkeit des eingesetzten Werkstoffes aus. Da sich der Fahrzeugluftreifen während seines Einsatzes aufgrund von Hystereseverlusten erwärmt, stellt sich auch eine Erwärmung des mit komprimierter Luft gefüllten Reifeninnenraumes und damit der Reifenfelge ein. Aufgrund der hohen Wärmeleitfähigkeit des üblicherweise verwendeten Felgenmaterials kommt es über die Felgenoberfläche zu einem signifikaten Wärmetransport aus dem Rad in die Umgebung. Es hat sich jedoch gezeigt, dass durch Erhöhung der Lauftemperatur eines Kraftfahrzeugreifens der Rollwiderstand dieses Reifens reduzierbar, also verbesserbar ist. Der Reifeninnenraum ist der Hohlraum, welcher durch die Felge und den auf der Felge aufsitzende Reifen in dessen Innenraum gebildet ist.

Es sind verschiedene Arten von Fahrzeugluftreifen und Felgen bekannt, welche eine Wärmeisolierung aufgrund von zusätzlich auf die Oberfläche aufgebrachten wärmeisolierenden Schichten aufweisen.
So ist es beispielsweise aus der JP 2004082787 A bekannt, Kurzfasern auf der Außenfläche des Felgenringes, insbesondere im Felgenbett, anzuordnen.

Aus der DE 10 2012 102 418 A1 ist es bekannt, eine wärmeisolierende Schicht aus offenzelligem Material auf der Außenfläche des Felgenringes, insbesondere im Felgenbett, anzuordnen.

Die bisher unveröffentlichte Anmeldung der Anmelderin DE 10 2016 213 467.1 beschreibt eine wärmeisolierende Schicht aus Polyurethanschaum, welche auf den äußeren Oberflächen der Reifenseiten angeordnet sind, während die bisher unveröffentlichte Anmeldung der Anmelderin DE 10 2016 213 467.1 die vorgenannte wärmeisolierende Schicht aus Polyurethanschaum beschreibt, welche auf der Felge angeordnet ist.

*Aus der* US 2011/0057504 A1 *ist ein Kraftfahrzeugrad bekannt, welches auf der* Außenfläche des Felgenringes *ein wärmeisolierendes, insbesondere ringförmig umlaufendes, Gummimaterial aufweist. Das Gummimaterial ist aus einer ein Schäumungsmittel enthaltenden Kautschukmischung hergestellt, sodass das wärmeisolierende Gummimaterial Luftblasen enthält.*

*Die* WO2016/135264 A1 *offenbart einen Fahrzeugluftreifen mit einer Karkasseinlage, deren Gummierung einen Polyurethan-Kautschuk enthält. Das Gummimaterial des Laufstreifens und die Gummierung der Karkasseinlage sind über Urethan- und*/*oder Harnstoffbrücken aneinandergebunden, wobei keine zusätzlichen Haftschichten eingesetzt werden. Ein solcher Reifen soll einen geringen Rollwiderstand aufweisen.*

Der Erfindung liegt die Aufgabe zu Grunde, *ein wärmeisolierten Kraftfahrzeugrad an einem Nutzfahrzeug auf eine im Hinblick auf den Rollwiderstand* besonders effiziente Weise *einzusetzen, wobei* der Fahrzeugluftreifen weiterhin eine hohe strukturelle Haltbarkeit *aufweisen soll.*

Gelöst wird die Aufgabe durch die *Verwendung eines Kraftfahrzeugrades für ein Nutzfahrzeug an wenigstens einer Achse des Aufliegers einer Zugmaschine und*/*oder an zumindest einer Antriebsachse der Zugmaschine, wobei das Kraftfahrzeugrad eine Fahrzeugfelge aus Metall und einen auf diese Fahrzeugfelge aufgezogenen Fahrzeugluftreifen umfasst, wobei auf der Oberfläche der Fahrzeugfelge und*/*oder auf der Oberfläche des Fahrzeugluftreifens eine Wärmeisolierung in Form einer zusätzlichen wärmeisolierenden Schicht angeordnet ist,*
*wobei der blanke Fahrzeugluftreifen, also der Fahrzeugluftreifen ohne zusätzlich wärmeisolierende Schicht, einen Rollwiderstand ≤ 6,04 kg*/*t aufweist, wobei der Rollwiderstand gemäß Rollwiderstandstest ISO 28580 ermittelt ist,*
"Blanker Fahrzeugluftreifen" meint einen handelsüblichen Fahrzeugluftreifen ohne zusätzlich wärmeisolierende Schicht.

Erfindungsgemäß ist eine wärmeisolierte Felge und/oder ein wärmeisolierter Fahrzeugluftreifen mit dem Einsatz eines rollwiderstandsoptimierten Reifens kombiniert. Ein NFZ-Fahrzeugluftreifen mit einem Rollwiderstand ≤ 6,04 kg/t entspricht mindestens dem EU-Rollwiderstandslabel C oder besser. Diese bereits in ihrem Aufbau rollwiderstandsoptimierten Reifen weisen allgemein im Gebrauch aufgrund ihres vergleichsweise niedrigen Rollwiderstandes eine geringere Wärmedissipation auf als Reifen mit einem höheren Rollwiderstand und dadurch auch eine reduzierte Reifenlauftemperatur verglichen mit Standardreifen mit höherem Rollwiderstand. Das erfindungsgemäß *verwendete* wärmeisolierte Fahrzeugrad bewirkt eine vergleichsweise starke Erhöhung der Reifeninnenraumtemperatur in Bezug auf Standardreifen. Diese starke Erhöhung der Reifenlauftemperatur wirkt sich positiv auf den Rollwiderstand, aber nicht negativ auf die strukturelle Haltbarkeit des Reifens aus. Dies wird dadurch sichergestellt, dass ein haltbarkeitsschädigendes Temperaturniveaubei diesen rollwiderstandsoptimierten Reifen auch mit zusätzlich wärmeisolierender Schicht auf dem Reifen und/oder der Felge nicht erreicht wird. Somit ist *durch die Verwendung des vorgesehenen Fahrzeugrades der Rollwiderstand besonders wirkungsvoll optimiert, wobei das Rad eine hohe strukturelle Haltbarkeit aufweist.*

Das EU-Rollwiderstandslabel C oder besser für NFZ-Reifen wird in die nachfolgenden Klassen untergliedert:
EU-Rollwiderstandslabel C: Rollwiderstand von 5,05 - 6,04 kg/t
EU-Rollwiderstandslabel B: Rollwiderstand von 4,05 - 5,04 kg/t
EU-Rollwiderstandslabel A: Rollwiderstand < 4,05 kg/t.

Es hat sich in Versuchen gezeigt, dass pro °C erhöhte Reifeninnenraumtemperatur ein Rollwiderstandsvorteil von etwa 0,3 bis 0,4 % erreicht ist. Dies wurde mit Rollwiderstandstrommelprüfungen beim Vergleich wärmeisolierter mit nichtwärmeisolierten Felgen ermittelt, bei denen der Rollwiderstand und die Reifeninnenraumtemperatur ermittelt wurde. Hierzu wurde bei dem erfindungsgemäßen Fahrzeugrad im Tiefbett der eingesetzten Aluminiumfelge über dessen gesamte axiale Breite ein offenzelliger Polyurethanschaum auf Polyetherbasis mit einer Rohdichte von 26 kg/m3 und einer Dicke von 20 mm aufgebracht. Der Schaum wurde dabei mit Epoxidharzkleber auf der Felge aufgeklebt.

Die Rollwiderstandsmessung wurde in Anlehnung an die ISO 28580 durchgeführt. Die Ergebnisse dieser Versuche sind in den Tabellen 1 und 2 dargestellt.

**Tab. 1**

| | | | | Standard (nicht isolierte) Aluminiumfelge | | wärme-isolierte Aluminiumfelge | | |
|---|---|---|---|---|---|---|---|---|
| Reifendimension | Felge | Achs-position | Temperatur Felgenhohlraum bei Teststart (°C) | Rollwiderstand (N) | Temperatur Felgenhohlraum bei Testende (°C) | Rollwiderstand (N) | Temperatur Felgenhohlraum bei Testende (°C) | Rollwiderstandsvorteil für isolierte Felge (%) |
| 315/70 R 22,5 | 9.00 R 22,5 | Lenkachse | 25 | 159,9 | 72,8 | 157,85 | 77,2 | 1,3 |
| 315/70 R 22,5 | 9.00 R 22,5 | Antriebsachse | 25 | 147,8 | 67,7 | 145,25 | 73,0 | 1,7 |
| 385/55 R 22,5 | 11.75 R 2,5 | Trailerachse | 25 | 146,5 | 67,5 | 142,7 | 74,3 | 2,6 |

**Tab. 2**

| Reifendimension | Felge | Achs-position | Temperatur Felgenhohlraum bei Teststart (°C) | Temperaturunterschied für die isolierte Felge im Vergleich zur nicht isolieten Felge (°C) | Rollwiderstandsvorteil für isolierte Felge (N) | Rollwiderstandsvorteil pro °C erhöhte Felgenraumtemperatur (N) | Rollwiderstandsvorteil für isolierte Felge (%) | Rollwiderstandsvorteil pro °C erhöhte Felgenraumtemperatur (%) |
|---|---|---|---|---|---|---|---|---|
| 315/70 R 22,5 | 9.00 R 22,5 | Lenkachse | 25 | 4,3 | 2,05 | 0,48 | -1,3 | 0,30 |
| 315/70 R 22,6 | 9.00 R 22,5 | Antriebsachse | 25 | 5,3 | 2,55 | 0,48 | -1,7 | 0,33 |
| 385/55 R 22,5 | 11.75 R 2,5 | Trailerachse | 25 | 6,8 | 3,8 | 0,56 | -2,6 | 0,38 |

Zweckmäßig ist es, wenn die Fahrzeugfelge eine Aluminium-Fahrzeugfelge ist. Hierdurch ist ein niedriges Gewicht des Fahrzeugrades erhalten, was sich positiv auf den Kraftstoffverbrauch des Fahrzeuges auswirkt.

Vorteilhaft ist es, wenn der blanke Fahrzeugluftreifen einen Rollwiderstand ≤ 5,04 kg/t, bevorzugt ≤ 4,04 kg/t aufweist, wobei der Rollwiderstand gemäß Rollwiderstandstest ISO 28580 ermittelt ist. Hierdurch wird eine besonders hohe strukturelle Haltbarkeit des Reifens auch für den Fall ermöglicht, dass die Reifenlauftemperatur durch Wärmeisolation des Reifens oder Wärmisolation der Felge deutlich erhöht wird.

In einer bevorzugten Ausführung der Erfindung ist in dem Tiefbett der Fahrzeugfelge eine wärmeisolierende Schicht, vorzugsweise eine Lage aus offenzelligem Polyurethanschaum angeordnet, welche als offener, geschlossener oder durchbrochener Ring oder als Segmente eines Ringes über den Umfang des Tiefbettes umläuft.

Der Schaum aus Polyurethan weist eine dreidimensionale Offenzelligkeit und eine Dicke ≥ 12 mm sowie eine Bruchdehnung ≥ 40 % und eine Druckspannung *≤* 20 kPa auf. Die Bruchdehnung wird ermittelt nach ISO 1798. Die Druckspannung wird ermittelt nach ISO 3386.

In einer vorteilhaften Weiterbildung ist vorgesehen, dass der Schaum eine Dichte zwischen 10 und 100 kg/m³, bevorzugt zwischen 15 und 40 kg/m³ aufweist. Die Dichte wird ermittelt nach ISO 845.
In einer vorteilhaften Weiterbildung ist vorgesehen, dass der Schaum eine bei 40% ermittelte Druckspannung zwischen 5 und 10 kPa aufweist. Die Zugspannung wird ermittelt nach ISO 3386.

In einer vorteilhaften Weiterbildung ist vorgesehen, dass
der Schaum eine Zugfestigkeit ≥ 60 kPa, bevorzugt ≥ 90 kPa aufweist. Die Zugfestigkeit wird ermittelt nach ISO 1798.
In einer vorteilhaften Weiterbildung ist vorgesehen, dass der Schaum eine Bruchdehnung ≥ 70 % aufweist. Die Bruchdehnung wird ermittelt nach ISO 1798. In einer vorteilhaften Weiterbildung ist vorgesehen, dass der Schaum eine maximal axiale Erstreckung aufweist, welche den Bereich der Felgeninnenseite überdeckt, welcher zwischen den beiden auf dem Felgensitz aufsitzenden Wulstzehen der Reifenwülste verbleibt und eine minimale axiale Erstreckung aufweist, welche 0,6 x der maximalen axialen Erstreckung entspricht.

In einer vorteilhaften Weiterbildung ist vorgesehen, dass der Schaum eine Dicke ≥ 15 mm, vorzugsweise ≥ 20 mm aufweist, jedoch nicht 30% der Reifeninnenraumhöhe überschreitet, wobei die Dicke des Schaumes in radialer Richtung gemessen wird und wobei die Reifeninnenraumhöhe an der Stelle größter Höhe zwischen Felgeninnenseite und Reifeninnenschicht gemessen wird.
In einer vorteilhaften Weiterbildung ist vorgesehen, dass der Schaum aus Polyurethan auf Polyetherbasis besteht. Polyurethanschäume auf Polyetherbasis weisen eine besonders hohe Hydrolysebeständigkeit auf, was sich vorteilhaft auf die dauerhafte Robustheit des Schaumes auswirkt.

Zweckmäßig ist es, wenn die Fahrzeugfelge eine Breite von wenigstens 5 Zoll, bevorzugt größer 10 Zoll aufweist. Es hat sich überraschenderweise als besonders wirkungsvoll für einen verbesserten Rollwiderstand erwiesen, breite Fahrzeugfelgen zu isolieren.

Überraschender Weise ist die Optimierung des Rollwiderstandes besonders effektiv, wenn wenigstens eine Achse des Trailers, vorzugsweise alle Achsen des Trailers mit wärmeisolierenden Fahrzeugrädern ausgerüstet sind.

Ebenfalls hat sich überraschenderweise herausgestellt, dass die Zugmaschine besonders effizient in Bezug auf den Kosten-/ Nutzenaufwand rollwiderstandsoptimiert ist, wenn die Antriebsachse(n) der Zugmaschine wärmeisolierende Fahrzeugräder aufweisen. Hierbei ist es besonders effizient, wenn ausschließlich die Antriebsachse(n) der Zugmaschine die wärmeisolierten Fahrzeugräder aufweist(en) und die Lenkachse keine wärmeisolierenden Fahrzeugräder aufweist.

Die nachfolgende Tabelle 3 zeigt das Ergebnis von Kraftstoff- Verbrauchsmessungen eines Nutzfahrzeuges mit Fahrzeugrädern mit Standardfelgeen im Vergleich zu erfindungsgemäßen Fahrzeugrädern, bei denen die Felgen wärmeisoliert und die auf die Felge aufgezogenen Reifen einen Rollwiderstand < 6,04 kg/t aufweisen.
Es wurden drei Testläufe von erfindungsgemäßen wärmeisolierten Fahrzeugrädern an der Lenkachse, der Antriebsachse und der Aufliegerachse eines Nutzfahrzeuges aufweisend eine Zugmaschine und einen Auflieger durchgeführt.
Das in den Testläufen eingesetzte Fahrzeug wurde auf der Lenkachse und der Antriebsachse mit 315/70 R 22,5" Reifen auf 9.00 R 22,5" Aluminiumfelgen betrieben, wobei das Fahrzeug mit einer Lenkachse mit zwei Rädern und einer Antriebsachse mit vier Rädern ausgestattet war. Diese Zugmaschine war mit einem 3 achsigen Auflieger mit sechs 385/55 R 22,5" Reifen auf 11.75 R 22,5" Aluminiumfelgen verbunden Das Fahrzeuggesamtgewicht betrug 40 metrische Tonnen. Es wurde für alle Reifen/Felgen Positionen jeweils ein Satz mit nicht wärmeisolierten Felgen gegenüber einem Satz mit wärmeisolierten Felgen im Vergleich getestet, wobei dieser Vergleich in drei separaten Testläufen mehrfach durchgeführt wurde.
Bei den nicht wärmeisolierten Felgen hat es sich dabei um handelsübliche Aluminiumfelgen gehandelt, bei den wärmeisolierten Felgen wurden gleiche handelsübliche Aluminiumfelgen mit einer Wärmeisolationsschicht im Felgentiefbett ausgestattet. Bei diesen isolierten Felgen wurde im Tiefbett der Aluminiumfelge über dessen gesamte axiale Breite ein offenzelliger Polyurethanschaum auf Polyetherbasis mit einer Rohdichte von 26 kg/m3 und einer Dicke von 20 mm aufgebracht. Der Schaum wurde dabei mit Epoxidharzkleber auf der Felge aufgeklebt.

**Tab. 3**

| | Kraftstoffverbrauch des Testfahrzeuges | | | |
|---|---|---|---|---|
| | Standard-Felge | | isolierte Felge | |
| | l/100km | % | l/100km | % |
| Testlauf 1 | 28,38 | 100 | 28,19 | 99,3 |
| Testlauf 2 | 28,34 | 100 | 28,26 | 99,7 |
| Testlauf 3 | 27,69 | 100 | 27,51 | 99,4 |
| Durchschnitt der 3 Testläufe | 28,14 | 100 | 27,99 | 99,5 |

Bei den vorgenannten Vebrauchsmessungen hat sich gezeigt, daß der Kraftstoffverbrauch des Fahrzeuges bei Einsatz von isolierten Felgen für alle 12 Reifen, verglichen mit dem Einsatz von nicht isolierten Felgen, im Durchschnitt um 0,5 % reduziert werden konnte.

Die Tabelle 4 zeigt Ergebnisse aus Verbrauchmessungen bezüglich der Veränderung der Felgeninnenraumtemperatur durch Isolation der Felge. Die Versuchsbedingungen sind wie zuvor beschrieben.

**Tab. 4**

| | | Lenkachse | Antriebsachse | Trailerachse |
|---|---|---|---|---|
| testlauf 1 | Fetgeninnenraumtemperatur Standard Felge (°C) | 60,1 | 55,8 | 59,8 |
| | Felgeninnenraumtemperatur isolierte Felge (°C) | 59,4 | 57,8 | 63,6 |
| testlauf 2 | Felgeninnenraumtemperatur Standard Felge (°C) | 56,2 | 53,0 | 56,8 |
| | Felgeninnenraumtemperatur isolierte Felge (°C) | 57,5 | 57,7 | 61,9 |
| testlauf 3 | Felgeninnenraumtemperatur Standard Felge (°C) | 59,6 | 58,5 | 60,9 |
| | Felgeninnenraumtemperatur isolierte Felge | 61,4 (°C) | 62,4 | 66,2 |
| | | | | |
| testlauf 1 | Delta Felgeninnraumtemperatur "isolierte Felge" gegenüber "Standard Felge" (°C) | -0,7 | 2,0 | 3,8 |
| testlauf 2 | Delta Felgeninnraumtemperatur "isolierte Felge" gegenüber "Standard Felge" (°C) | 1,3 | 4,7 | 5,1 |
| testlauf 3 | Delta Felgeninnraurntemperatur "isolierte Felge" gegenüber "Standard Felge" (°C) | 1,7 | 3,9 | 5,3 |
| | | | | |
| Durchschnitt testlauf 1-3 | Delta Felgeninnraumtemperatur "isolierte Felge" gegenüber "Standard Felge" (°C) | 0,8 | 3,5 | 4,7 |

Es zeigt sich, dass die Reifeninnenraumtemperatur von Aufliegerrädern am stärksten angestiegen ist, nachgefolgt von den Rädern der Antriebsachse. Da die Rollwiderstandsverbesserung zur Erhöhung der Reifeninnenraumtemperatur, verglichen mit der nicht isolierten Felge, korreliert, ist ersichtlich, dass die größte Rollwiderstandsverbesserung bei isolierten Aufliegerrädern, nachgefolgt von Rädern der Antriebsachse erreicht ist. Die Isolierung von Rädern der Lenkachse ist nicht so effektiv.

Weitere Merkmale und Vorteile der Erfindung werden anhand von erfindungsgemäßen schematischen Ausführungsbeispielen näher erläutert. Es zeigen die:
- Fig. 1: eine Tiefbettfelge mit wärmeisolierender Schicht im Querschnitt;
- Fig. 2: einen Fahrzeugluftreifen mit wärmeisolierender Schicht auf den seitenwänden für NFZ im Querschnitt;
- Fig. 3: ein erfindungsgemäßes Nutzfahrzeug aus Zugmaschine und Auflieger mit wärmeisolierten Rädern.

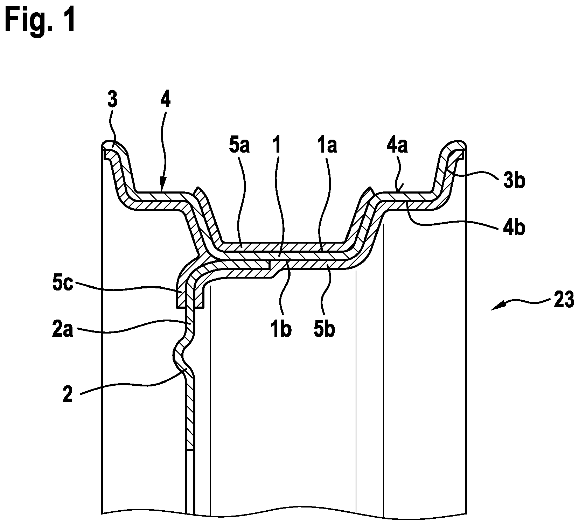

Die Fig. 1 zeigt eine Tiefbettfelge herkömmlicher Ausgestaltung mit wärmeisolierender Schicht im Querschnitt mit einem Felgenbett 1, zu beiden Seiten an dieses anschließende Felgenschultern 4 mit Wulstsitzflächen 4a und mit Felgenhörnern 3. Die Felge weist ferner eine Radscheibe bzw. einen Radkranz 2 auf, welche bzw. welcher in an sich bekannter Weise einen Radnabenbereich zur Anordnung der Felge an einem Aufhahmeflansch einer Radlagerung eines Kraftfahrzeuges aufweist. Ein nicht dargestellter, auf der Felge montierter Fahrzeugluftreifen befindet sich mit seinen Wulstbereichen in Kontakt mit den Wulstsitzflächen 4a und den Felgenhörnern 3.

An der Außenseite und/oder der Innenseite von Felgenbestandteilen ist zumindest eine wärmeisolierende Schicht 5a, 5b aufgebracht, wobei als Außenseite die einem auf der Felge montierten Reifen zugewandte Seite bezeichnet ist. Bei der in Fig. 1 gezeigten Ausführungsform erstreckt sich die wärmeisolierende Schicht 5a über die Außenseite 1a des Felgenbettes 1 und bis zu den beiden Wulstsitzflächen 4a, jedoch nicht über die Wulstsitzflächen 4a. Die wärmeisolierende Schicht 5b befindet sich an der Innenseite 1b des Felgenbettes 1, ferner an den Innenseiten 4b der Felgenschultern 4 und den Innenseiten 3b der Felgenhörner 3. Darüber hinaus sind weitere wärmeisolierende Schichten 5c an beiden Seiten des von der Innenseite 1b des Felgenbettes 1 ausgehenden ersten Abschnittes 2a der Radscheibe bzw. des Radkranzes 2 aufgebracht.

Die wärmeisolierenden Schichten 5a, 5b, 5c bestehen beispielsweise aus Flockfasern oder einem Schaum wie Polyurethan, welche beispielsweise auf die Felge geklebt sind. Das eingesetzte Polyurethansystem kann auf Polyetherbasis oder Polyesterbasis sein. Die gebildete Schaumschicht kann offenzellig, gemischtzellig oder geschlossenzellig sein und wird mit einer Dicke von 1 mm bis zu 30 mm, insbesondere bis zu 20 mm, hergestellt. Die Shore A Härte des Schaumes nach DIN ISO 7619-1 kann zwischen 0 und 50 Shore A betragen, seine Dichte beträgt zwischen 0,01 g/cm³ und 0,90 g/cm³.

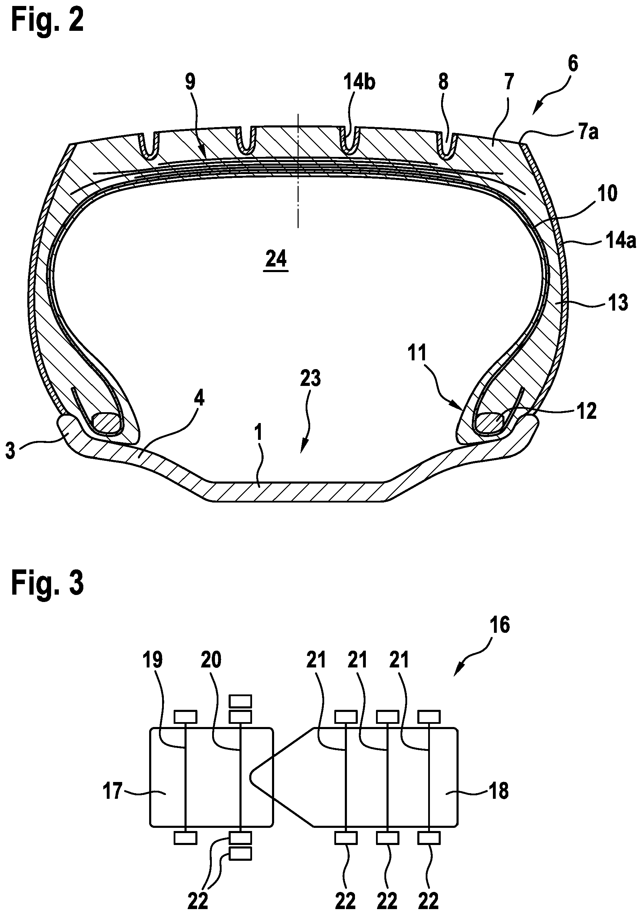

Fig. 2 zeigt schematisch einen Querschnitt eines Fahrzeugluftreifens 6 für NFZ, montiert auf einer Tiefbettfelge 23 mit einem Felgenbett 1, Felgenschultern 4 und Felgenhörner 3. Der Fahrzeugluftreifen 6 weist einen Laufstreifen 7 mit einer Profilierung auf, von welcher beispielhaft Umfangsrillen 8 gezeigt sind. Der Laufstreifen 7 kann weitere, nicht gezeigte Profilrillen aufweisen, die beispielsweise in axialer Richtung verlaufen und gemeinsam mit weiteren Profilrillen Profilpositive, wie Profilblöcke oder Profilrippen bilden. Weitere dargestellte Bestandteile des Fahrzeugluftreifens 6 sind ein Gürtelverband 9, welcher in an sich bekannter Weise aus mehreren Gürtellagen bestehen kann, eine ein- oder mehrlagige Karkasseinlage 10, welche ebenfalls in an sich bekannter Weise ausgeführt sein kann und in Wulstbereichen Wulstkerne 12 umschlingt und Seitenwände 13. Die Wulstbereiche 11 liegen an den Felgenschultern 2b und an den Felgenhörnern 2c an.

An der Außenseite des Fahrzeugluftreifens 6 ist zumindest eine Schaumschicht als wärmeisolierende Schicht 14a, 14b aufgebracht. Bei der gezeigten Ausführungsform befinden sich Wärmeisolationsschichten 14a auf jeder Seitenwand 13. Die Wärmeisolationsschichten 14a verlaufen zwischen den mit der Reifenfelge 2 in Kontakt kommenden Außenflächen der Wulstbereiche 11 und den seitlichen Rändern 7a der Bodenaufstandsfläche bzw. Fahrfläche des Laufstreifens 7 Auf den Seitenwänden 13 werden zumindest die mit Kennzeichen bzw. Beschriftungen versehenen Bereiche ausgespart und nicht mit wärmeisolierenden Schichten 14a bedeckt. Ansonsten können die wärmeisolierenden Schichten 14a beliebige Teilbereiche bedecken.
Die wärmeisolierenden Schichten 14b sind Auskleidungen von Profilrillen 8, wobei sämtliche Profilrillen oder einige der Profilrillen, zumindest teilweise, insbesondere komplett, mit wärmeisolierenden Schichten 14b ausgekleidet sind. Zum Auskleiden eignen sich vor allem Profilrillen, deren Mindestbreite an der Laufstreifenaußenfläche 3 mm beträgt. Im Inneren des Reifens ist der Reifeninnenraum 24 ausgebildet

Die wärmeisolierte Felge der Fig.1 kann mit einem wärmeisolierten Reifen der Fig.2 kombiniert sein.

Die Fig. 3 zeigt ein erfindungsgemäßes Nutzfahrzeug 16 aus Zugmaschine 17 und Auflieger 18 mit Rädern, welche teilweise wärmeisoliert ausgebildet sind. Die Zugmaschine weist eine Lenkachse 19 und eine Antriebsachse 20 auf, während der Auflieger drei Aufliegerachsen 21 aufweist. Um besonders effizient das Nutzfahrzeug in seinem Rollwiderstand zu verbessern, sind die Räder der Antriebsachse 20 und die Räder der Aufliegerachsen 21 wärmeisoliert, beispielsweise wie in der Fig. 1 und/oder Fig. 2 beschriebenen Art und Weise.

### Bezugszeichenliste

### (ist Teil der Beschreibung)

- 1: Felgenbett
- 1a: Außenseite
- 1b: Innenseite
- 2: Kradkranz
- 2a: Abschnitt
- 3: Felgenhorn
- 3b: Innenseite
- 4: Felgenschulter
- 4a: Wulstsitzfläche
- 4b: Innenseite
- 5a, 5b, 5c: wärmeisolierende Schicht
- 6: Fahrzeugluftreifen
- 7: Laufstreifen
- 8: Umfangsrillen
- 9: Gürtelverband
- 10: Karkasseinlage
- 11: Wulstbereiche
- 12: Wulstkern
- 13: Seitenwand
- 14a, 14b: wärmeisolierende Schicht
- 15: Seitenwand
- 16: Nutzfahrzeug
- 17: Zugmaschine
- 18: Auflieger
- 19: Lenkachse
- 20: Antriebsachse
- 21: Aufliegerachse
- 22: wärmeisoliertes Rad
- 23: Tiefbettfelge
- 24: Reifeninnenraum

## Patentansprüche

1. *Verwendung eines Kraftfahrzeugrades (*22) *für ein Nutzfahrzeug*
*an wenigstens einer Achse (21) des Aufliegers (18) einer Zugmaschine (17) und*/*oder an zumindest einer Antriebsachse (20) der Zugmaschine (17), wobei das Kraftfahrzeugrad* eine Fahrzeugfelge (23) aus Metall und einen auf diese Fahrzeugfelge (23) aufgezogenen Fahrzeugluftreifen (6) *umfasst,* wobei auf der Oberfläche der Fahrzeugfelge (23) und/oder auf der Oberfläche des Fahrzeugluftreifens (6) eine Wärmeisolierung in Form einer zusätzlichen wärmeisolierenden Schicht (5a, 5b, 5c, 14a, 14b) angeordnet ist,
*wobei* der blanke Fahrzeugluftreifen (6), also der Fahrzeugluftreifen ohne zusätzlich wärmeisolierende Schicht, einen Rollwiderstand ≤ 6,04 kg/t aufweist, wobei der Rollwiderstand gemäß Rollwiderstandstest ISO 28580 ermittelt ist.

2. *Verwendung eines Kraftfahrzeugrades* (22) nach Anspruch 1 *an sämtlichen Achsen (21) eines Aufliegers (18) der Zugmaschine (17).*

3. *Verwendung eines Kraftfahrzeugrades* (22) nach Anspruch 1 *ausschließlich an der bzw. den Antriebsachse(n) (21) der Zugmaschine (17).*

4. *Verwendung eines Kraftfahrzeugrades* (22) nach Anspruch 1 *an der bzw. den Antriebsachse(n) der Zugmaschine und an wenigstens einer Achse des Aufliegers.*

5. *Verwendung eines* Kraftfahrzeugrades (22) *nach einem der Ansprüche 1 bis 4, wobei die* Fahrzeugfelge (23) eine Aluminium-Fahrzeugfelge ist.

6. *Verwendung eines* Kraftfahrzeugrades (22) *nach einem der Ansprüche 1 bis 5, wobei der* blanke Fahrzeugluftreifen (6) einen Rollwiderstand ≤ 5,04 kg/t, bevorzugt ≤ 4,04 kg/t aufweist, wobei der Rollwiderstand gemäß Rollwiderstandstest ISO 28580 ermittelt ist.

7. *Verwendung eines* Kraftfahrzeugrades *nach einem der Ansprüche 1 bis 6, wobei im* Felgenbett (1) der Fahrzeugfelge (23) eine wärmeisolierende Schicht (5a), vorzugsweise eine Lage aus Polyurethan angeordnet ist, welche als offener oder geschlossener Ring über den Umfang des Tiefbettes umläuft.

8. *Verwendung eines* Kraftfahrzeugrades *nach einem der Ansprüche 1 bis 7, wobei die* Fahrzeugfelge (23) eine Breite von wenigstens 5 Zoll, bevorzugt größer 10 Zoll aufweist.

## Claims

1. Use of a motor vehicle wheel (22) for a commercial vehicle on at least one axle (21) of the semitrailer (18) of a tractor unit (17) and/or on at least one drive axle (20) of the tractor unit (17), the motor vehicle wheel comprising a vehicle rim (23) of metal and a pneumatic vehicle tyre (6) fitted on this vehicle rim (23), a thermal insulation in the form of an additional heat-insulating layer (5a, 5b, 5c, 14a, 14b) being arranged on the surface of the vehicle rim (23) and/or on the surface of the pneumatic vehicle tyre (6), the bare pneumatic vehicle tyre (6), that is to say the pneumatic vehicle tyre without the additionally heat-insulating layer, having a rolling resistance of ≤ 6.04 kg/t, the rolling resistance being determined according to rolling resistance test ISO 28580.

2. Use of a motor vehicle wheel (22) according to Claim 1 on all of the axles (21) of a semitrailer (18) of the tractor unit (17),

3. Use of a motor vehicle wheel (22) according to Claim 1 only on the drive axle or drive axles (21) of the tractor unit (17),

4. Use of a motor vehicle wheel (22) according to Claim 1 on the drive axle or drive axles of the tractor unit and on at least one axle of the semitrailer.

5. Use of a motor vehicle wheel (22) according to one of Claims 1 to 4, the vehicle rim (23) being an aluminium vehicle rim.

6. Use of a motor vehicle wheel (22) according to one of Claims 1 to 5, the bare pneumatic vehicle tyre (6) having a rolling resistance of ≤ 5.04 kg/t, preferably ≤ 4.04 kg/t, the rolling resistance being determined according to rolling resistance test ISO 28580.

7. Use of a motor vehicle wheel according to one of Claims 1 to 6, a heat-insulating layer (5a) being arranged in the rim well (1) of the vehicle rim (23), preferably a layer of polyurethane that runs as an open or closed ring around the circumference of the well base.

8. Use of a motor vehicle wheel according to one of Claims 1 to 7, the vehicle rim (23) having a width of at least 5 inches, preferably greater than 10 inches.

## Revendications

1. *Utilisation d'une roue de véhicule automobile (22) pour un véhicule utilitaire sur au moins un essieu (21) de la remorque (18) d'un tracteur (17) et*/*ou sur au moins un essieu moteur (20) du tracteur (17), la roue de véhicule automobile comprenant* une jante de véhicule (23) en métal et un pneu de véhicule (6) monté sur cette jante de véhicule (23), une isolation thermique sous la forme d'une couche d'isolation thermique supplémentaire (5a, 5b, 5c, 14a, 14b) étant agencée sur la surface de la jante de véhicule (23) et/ou sur la surface du pneu de véhicule (6),
*dans laquelle* le pneu de véhicule nu (6), c'est-à-dire le pneu de véhicule sans couche d'isolation thermique supplémentaire, présente une résistance au roulement ≤ 6,04 kg/t, la résistance au roulement étant déterminée selon le test de résistance au roulement ISO 28580.

2. *Utilisation d'une roue de véhicule automobile (22)* selon la revendication 1 *sur tous les essieux (21) d'une remorque (18) du tracteur (17).*

3. *Utilisation d'une roue de véhicule automobile (22)* selon la revendication 1 *exclusivement sur le ou les essieux moteurs (21) du tracteur (17).*

4. *Utilisation d'une roue de véhicule automobile* (22) selon la revendication 1 *sur le ou les essieux moteurs du tracteur et sur au moins un essieu de la remorque.*

5. *Utilisation d'une* roue de véhicule automobile (22) *selon l'une quelconque des revendications 1 à 4, dans laquelle* la jante de véhicule (23) est une jante de véhicule en aluminium.

6. *Utilisation d'une* roue de véhicule automobile (22) *selon l'une quelconque des revendications 1 à 5, dans laquelle* le pneu de véhicule nu (6) présente une résistance au roulement ≤ 5,04 kg/t, de préférence ≤ 4,04 kg/t, la résistance au roulement étant déterminée selon le test de résistance au roulement ISO 28580.

7. *Utilisation d'une* roue de véhicule automobile *selon l'une quelconque des revendications 1 à 6, dans laquelle* une couche d'isolation thermique (5a), de préférence une strate de polyuréthane, est agencée dans la base de jante (1) de la jante de véhicule (23), qui s'étend sur la périphérie de la gorge sous la forme d'un anneau ouvert ou fermé.

8. *Utilisation d'une* roue de véhicule automobile *selon l'une quelconque des revendications 1 à 7, dans laquelle* la jante de véhicule (23) présente une largeur d'au moins 5 pouces, de préférence supérieure à 10 pouces.
